# EUROPEAN PATENT APPLICATION

(11) **EP 0 681 094 A1**
(43) Date of publication of application: **08.11.1995**
(21) Application number: 95303048.3
(22) Date of filing: 03.05.1995
(51) Int. Cl.: F01M 11/03, B01D 27/08

(54) **Fluid filters**

(30) Priority: 05.05.1994 GB 9408973
(71) Applicant: FRAM EUROPE LIMITED, Pontyclun, Mid Glamorgan CF 8YU (GB)
(72) Inventor: Mules, Robert Stephen, Talbot Green, Mid Glamorgan CF7 8JF (GB)
(74) Representative: Allen, William Guy Fairfax

(57) **Abstract**

A lubrication oil filter comprising a generally cylindrical bowl shaped housing (1), clean side and dirty side flow ports (3,4) and a drain passage (5) to said housing and a cover (6) which normally closes an opening at the upper end of the housing. The cover is detachable from said housing to give access to a generally cylindrical filter element (10) within the housing and a support tube extends axially through said filter element, to communicate oil to be filtered to said clean side port such as to support the filter element against distortion under a fluid pressure differential flowing between said ports. The support tube (12) normally closes the drain passage (5), and is mounted to depend from the cover so as to be removable with the cover thereby to uncover the drain passage and permit flow therethrough.

## Description

This invention relates to fluid filters and relates especially but not exclusively to lubrication oil filters for internal combustion engines.

Many different configurations of lubrication oil filters have been proposed before. Most of these proposals have been designed to be attached to a crankcase or cylinder block of an internal combustion engine so that no pipe connections are required. All such filters are adapted to receive oil pumped from an engine crankcase, sump or separate oil tank and to delivery filtered oil to the bearings oilways and galleries of the engine before returning same to the crankcase or tank. Typically, such a filter has comprised a replaceable pleated paper annular filter element contained either in a disposable spin-on cartridge or in an assembly such as is known as a bowl and bolt arrangement in which a cylindrical bowl including the filter element is retained in position by means of an axial bolt. In a further design, the filter element may be contained in a cylindrical chamber provided with a removable end cover, removal of which enables access to the element for regular replacement.

Replaceable pleated paper filter elements have in the past been constructed with metal end-caps sealing the ends of the pleats and a centre tube providing axial and radial stability, particularly against the distortion effects due for example to pressure differential in operation.

One construction of an oil filter for an internal combustion engines is described in EP-A-0421080 in which there is disclosed a generally cylindrical filter housing having a screw-in end cover. The end cover is removable to gain access to an annular pleated paper filter element. The filter element has end-caps typically of metal and inner and outer perforated tubes which will normally provide protection for the filter element against distortion during assembly and in operation. In the example shown in the aforementioned European patent specification, the housing also includes a valve assembly which can provide oil bypass in the event of oil pressure differential becoming excessive. In addition, the valve assembly is acted upon by the insertion force of the filter element to maintain a drain valve closed until the end cover is unscrewed prior to removal.

One possible shortcoming of a prior filter as outlined above is that when the engine is stationary, the oil may slowly run from the housing towards the engine pump and upon restarting following a lengthy stationary period the engine may rotate an appreciable number of revolutions before full oil flow is resumed following refilling of the filter housing.

Another possible shortcoming of a prior filter as described above may reside in the possibility that the drain valve assembly referred to is located at the dirty side of the filter and may be readily removed for cleaning and this introduces some complexity and it may possibly be omitted on reassembly resulting in little or no oil flow to the engine bearings upon restarting.

Yet another possible shortcoming of the prior filter as described above may stem from the modern trend towards the use of filter elements which are readily disposable by combustion or other means whereas a filter element of the type described usually comprises metallic components which will be difficult to recover for reuse or to dispose of.

The present invention seeks to provide an improved lubrication oil filter in which some or all of the foregoing shortcomings are removed or reduced.

According to the present invention there is provided a lubrication oil filter comprising a generally cylindrical bowl shaped housing with clean side and dirty side flow ports and a drain passage and a cover which normally closes an opening of an upper end of the housing but which is detachable therefrom to give access to a generally cylindrical filter element within and a centre tube extending axially through said filter element to communicate filter oil to said clean side port such as to support the filter element against distortion under a fluid pressure differential flowing between said ports and characterised in that said centre tube normally closes the drain passage but is removable with the cover to uncover the drain passage.

Preferably the centre tube has no fluid flow apertures in a region near the lower end to create a level retaining weir within the housing.

Preferably the centre tube has an undulating surface permitting circumferential flow as between one filter pleat and the next.

Preferably said undulating surface is provided by a spiral upstand.

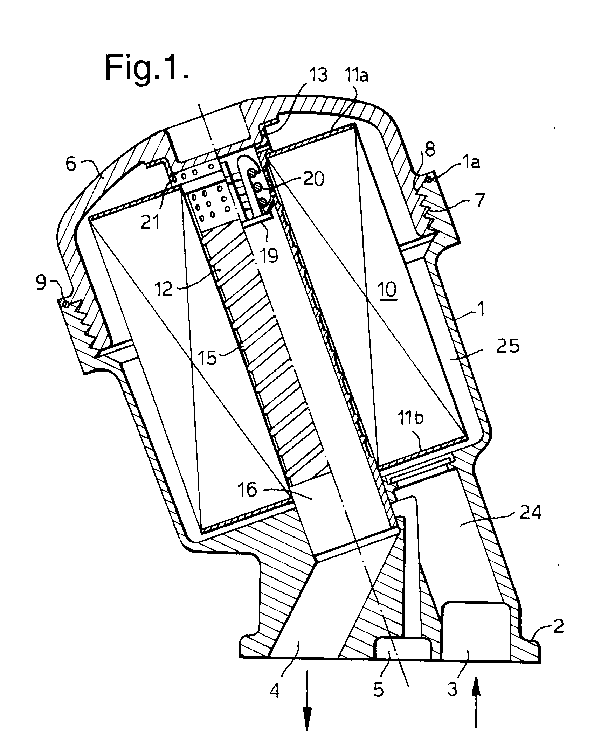

In order that the present invention may more readily be understood, the following description is given, merely by way of example, reference being made to the accompanying drawings in which:-
Figure 1 is a part-sectional diagrammatic view of a lubrication oil filter for an internal combustion engine; and

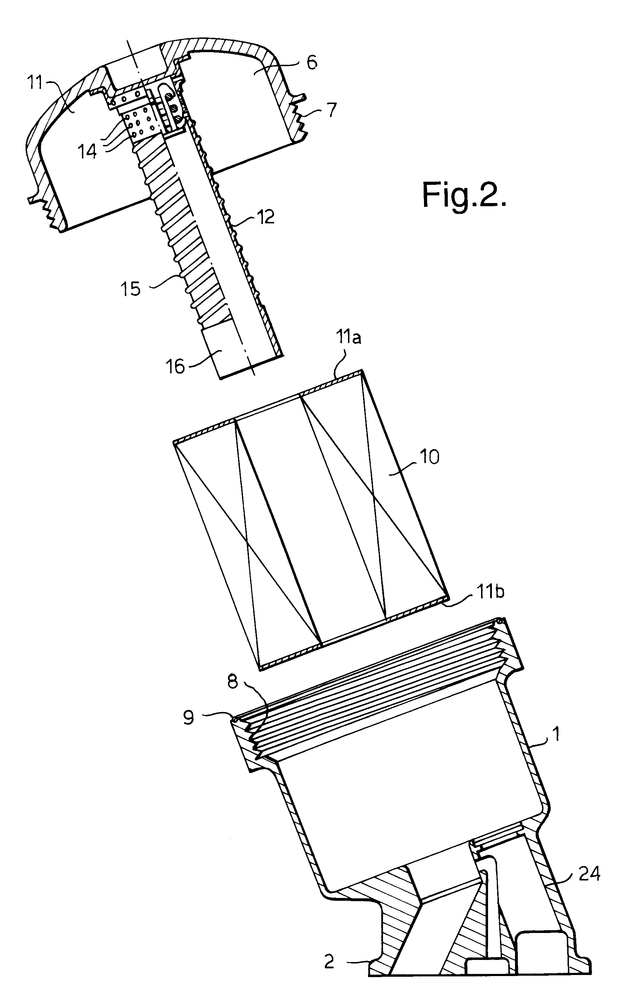

Figure 2 is an exploded view (on reduced scale) of the filter shown in Figure 1.

Referring to the drawings, the filter shown includes a generally cylindrical main housing 1 comprising a casting of aluminium or alloy having a mounting flange provided with stud-holes (not shown) for mounting to the crankcase of an internal combustion engine. The flange 2 has a dirty-side inlet port 3, a clean-side delivery port 4 and a drain port 5. The port 3 is connected via an oil pump to the engine sump dip-tube, the port 5 is a return port to the engine sump and the port 4 is connected to the lubrication oil ways of the engine. The housing 1 is provided with a screw-in cover 6 which closes the upper open end 1a of the housing, the cover and housing having complementary screw threads 7 and 8 and an 'O' ring seal 9 as shown. A pleated paper filter element 10 is formed with conventional pleated paper construction bonded to end discs which seal the ends of the pleats. The filter element is carried on a support tube 12 carried at its upper end by an inward projection 13 of the cover 6. The support tube is thus coaxial with the housing 1 and is provided with oil flow aperture(s) as at 14 in a region limited towards the upper end of the tube. The tube is also formed with an undulating outer surface provided by a spiral formation or upstand 15 of about twelve turns, the inner pleat peaks being thereby held away from the intermediate cylindrical surface area of the support tube. Furthermore, the lower end 16 of the support tube extends downwardly sufficiently beyond the lower end 11b of the filter element and enters the delivery passage of the housing with a close fit such as to block the upper end of the passage 17 leading to drain port 5. Within the upper end of the tube 12 there is provided a spring loaded bypass valve 8 having a valve member 19 and a bias spring 20, access to which valve is provided from the dirty side of the filter element via a ring of apertures 21 above a shoulder 22 against which the upper end disc lla of the filter element is clamped. Lastly, whilst not shown in detail, the housing is provided with a dirty side anti drain valve 24 located in the passage from the port 3 into the interior of the housing.

In operation of the filter, pumped oil flows from port 3 via the anti drain valve to the annular exterior region 25 from where it flows inwards via the filter element 10. By virtue of the aperture(s) 14 being limited to a region near the upper end of the support tube, the clean side oil is driven upwards and this flow is assisted by the spiral 15 which ensures that upward flow is not restricted to the respective pleats. The lower edges of the aperture(s) 14 will be seen to form a weir beneath which the oil level in the filter will not normally descend and the outlet flow is normally over this weir and downwards via the interior of the support tube to the delivery port.

In the event of the pressure differential across the filter element 10 exceeding a predetermined value, the pressure in region 25 can cause valve member 19 to lift against the force of spring 20 and continued flow to the engine is ensured albeit from the dirty side in known manner. Normally the filter will be serviced before such bypass occurs and this is achieved by unscrewing the cover 2 from the housing 1. This will also withdraw the support tube upwards and uncover the drain passage from the interior of the housing.via port 5. This permits the oil in the housing to drain downward into the engine sump and the filter element is then removed by withdrawal from the support tube and replaced with a new one. The engine oil will normally be drained out and replaced with new oil at the same occasion.

Whilst the present filter housing is manufactured as an aluminium or alloy casing it may be a moulded plastic or other suitable material or composite of materials as required. In the preferred structure illustrated, the axis of the housing 1 and the support tube 12 is inclined to the vertical.

## Claims

1. A lubrication oil filter comprising a generally cylindrical bowl shaped housing (1), clean side and dirty side flow ports (3,4) and a drain passage (5) to said housing and a cover (6) which normally closes an opening at an upper end of the housing, said cover being detachable from said housing to give access to a generally cylindrical filter element (10) within said housing and a support tube (12) extending axially through said filter element, to communicate oil to be filtered to said clean side port such as to support the filter element against distortion under a fluid pressure differential flowing between said ports, characterised in that said support tube (12) normally closes the drain passage (5), but is removable with the cover to uncover the drain passage.

2. A filter according to claim 1, characterised in that the support tube (12) is carried at its upper end by an inward projection (13) of the cover (6), so that the support tube is coaxial with the housing.

3. A filter according to claim 1 or 2, characterised in that the support tube (12) has no fluid apertures in a region near the lower end, to create a level retaining weir within the housing.

4. A filter according to claim 1, 2 or 3, characterised in that the support tube (12) has an undulating surface permitting circumferential flow as between one filter pleat and the next.

5. A filter according claim 4, characterised in that said undulating surface is provided by a spiral upstand (15) formed on the outer surface of said support tube.

6. A filter according to any preceding claim, characterised in that said cylindrical housing has an axis inclined to the vertical.
